# EUROPÄISCHE PATENTANMELDUNG

(11) **EP 1 515 076 A1**
(43) Veröffentlichungstag der Anmeldung: **16.03.2005**
(21) Anmeldenummer: 04019117.3
(22) Anmeldetag: 12.08.2004
(51) Int. Cl.: F16L 55/027

(54) **Pneumatischer Abblas-Schalldämpfer**

(30) Priorität: 10.09.2003 DE 20314134 U
(71) Anmelder: Voss Automotive GmbH, 51688 Wipperfürth (DE)
(72) Erfinder: Borgmeier, Olav, 42499 Hückeswagen (DE)
(74) Vertreter: Zapf, Christoph, Dipl.-Ing.

(57) **Zusammenfassung**

Die vorliegende Erfindung betrifft einen Schalldämpfer (1) zur Dämpfung von in pneumatischen Drucksystemen durch Druck-Abblas-Strömungen (16) von einer Druckseite zu einer Atmosphärenseite entstehenden Geräuschen, bestehend aus einem einen Expansionsraum (4) umschließenden Gehäuse (2) mit einem druckseitigen Einlass (6) für die Abblas-Strömung (16) und einem gegenüberliegenden, atmosphärenseitigen Auslass (8). Innerhalb des Expansionsraums (4) ist in der Nähe des Einlasses (6) ein aus einem porösen, durchströmbaren Material bestehendes Dämpfungselement (18) angeordnet. Das Dämpfungselement (18) sollte eine durchströmbare Strömungsfläche aufweisen, die größer als die Innenquerschnittsfläche (A₁) des Expansionsraums (4) ist.

## Beschreibung

Die vorliegende Erfindung betrifft einen Schalldämpfer zur Dämpfung von in pneumatischen Drucksystemen durch Druck-Abblas-Strömungen von einer Druckseite zu einer Atmosphärenseite entstehenden Geräuschen, bestehend aus einem einen Expansionsraum umschließenden Gehäuse mit einem druckseitigen Einlass für die Abblas-Strömung und einem gegenüberliegenden, atmosphärenseitigen Auslass.

Ein solcher Schalldämpfer ist unter dem Begriff "Expansionsrohr" bekannt. Die Schalldämpfung beruht auf dem bekannten Prinzip "Doppelter Querschnittssprung", indem sich der Einlass zunächst in den Expansionsraum erweitert (Querschnittsvergrößerung) und letzterer in den verengten Auslass mündet (Querschnittsreduzierung). Zusätzlich ist in dem bekannten Expansionsrohr zur Filterung von von der Atmosphärenseite her über einen Kompressor durch den Schalldämpfer hindurch angesaugter Luft nahe vor dem Auslass ein scheibenförmiger, dem Innenquerschnitt des Expansionsraums entsprechender Luftfilter (Schaumstoff-Filter bzw. Sinter-Filterpatrone) angeordnet. Das bekannte Expansionsrohr ist bezüglich der Schalldämpfung noch nicht zufriedenstellend.

Der Erfindung liegt die Aufgabe zugrunde, einen Schalldämpfer der genannten Art so zu verbessern, dass eine deutlich effektivere Schalldämpfung erreicht wird.

Zur Lösung dieser Aufgabe können mehrere neue Erfindungsmaßnahmen einzeln (alternativ) oder aber in bestimmter Kombination angewandt werden.

Eine erste erfindungsgemäße Maßnahme besteht darin, innerhalb des Expansionsraums ein Dämpfungselement in der Nähe des Einlasses, und zwar vorzugsweise unmittelbar im Anschluß an den Einlass, anzuordnen. Dieses Dämpfungselement besteht aus einem formstabilen, aber porösen und dadurch durchströmbaren Material. Die Abblas-Strömung strömt somit vor, während oder unmittelbar nach dem ersten Querschnittssprung durch das Dämpfungselement hindurch, was eine sehr effektive Schalldämpfung um mindestens 5 dB bewirkt.

Zusätzlich zu der speziellen Anordnung des Dämpfungselementes im Bereich des Einlasses, eventuell aber auch alternativ (unabhängig davon), kann erfindungsgemäß vorgesehen sein, dass das Dämpfungselement eine durchströmbare Strömungsfläche aufweist, die größer als die Innenquerschnittsfläche des Expansionsraums ist. Durch diese Vergrößerung der für die Durchströmung zur Verfügung stehenden Fläche kann ebenfalls eine effektive Schalldämpfung erreicht werden.

Als weitere erfindungsgemäße Lösung der obigen Aufgabe kann innerhalb des Expansionsraums ein Dämm-Material, wie Watte oder dergleichen weiches, stopffähiges Fasermaterial, angeordnet sein. Diese Maßnahme führt ebenfalls zu einer Verbesserung der Schalldämpfung, und zwar sogar auch ohne das erfindungsgemäße Dämpfungselement bzw. mit einem bekannten scheibenförmigen Filterelement. Besonders vorteilhaft ist aber eine Kombination mit dem speziellen Dämpfungselement nach Anspruch 2 insbesondere mit der Anordnung nach Anspruch 1.

Schließlich sollte das Verhältnis des Innenquerschnittes des Expansionsraums zu dem Querschnitt des Auslasses im Bereich zwischen 2 : 1 und maximal 30 : 1 liegen, wobei erkannt wurde, dass überraschender Weise (weil in Abweichung von theoretischen Überlegungen) gerade kleinere Verhältnisse insbesondere im Bereich um 8 : 1 zu einem Optimum für die Dämpfung führen. Dies kann beispielsweise bei Vorgabe eines bestimmten Innenquerschnittes (Durchmessers) des Expansionsraums durch Vergrößerung des Querschnittes bzw. Durchmessers des Auslasses erreicht werden.

Weitere vorteilhafte Ausgestaltungsmerkmale der Erfindung sind in Unteransprüchen und der folgenden Beschreibung enthalten.

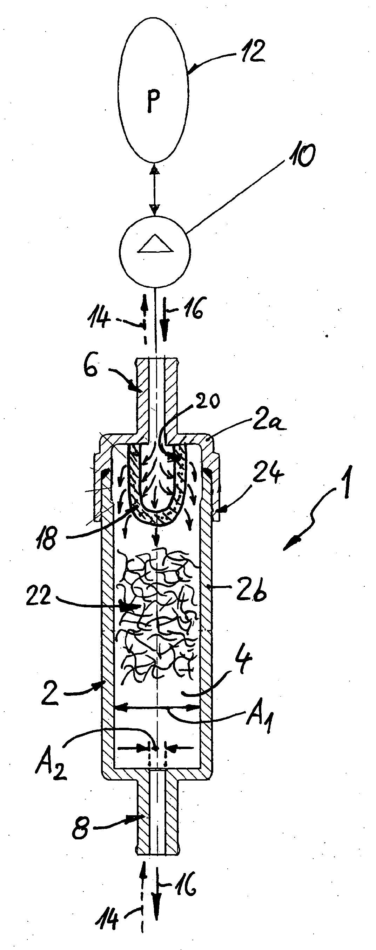

Anhand eines in der Zeichnung veranschaulichten, bevorzugten Ausführungsbeispiels soll die Erfindung genauer erläutert werden. Dabei zeigt die einzige Zeichnungsfigur einen erfindungsgemäßen Schalldämpfer im Längsschnitt zusammen mit schematischen Komponenten eines pneumatischen Drucksystems zur Verdeutlichung der Einbausituation des Schalldämpfers.

Ein erfindungsgemäßer Schalldämpfer 1 ist in einer Ansaugleitung (selbst nicht dargestellt) eines pneumatischen Drucksystems anzuordnen. Der Schalldämpfer 1 besteht aus einem patronenartigen Gehäuse 2, das einen Expansionsraum 4 umschließt und einen einseitigen Einlass 6 und einen gegenüberliegenden Auslass 8 aufweist. Wie dargestellt, weist der Expansionsraum 4 einen gegenüber dem Einlass 6 und dem Auslass 8 erweiterten Innenquerschnitt A1 entsprechend dem Prinzip "doppelter Querschnittssprung" auf. Der Einlass 6 wird über eine nicht dargestellte Schaltventilanordnung mit einem Kompressor 10 verbunden, der in einem beliebigen pneumatischen Aggregat 12 einen Druck p aufbaut. Dazu saugt der Kompressor 10 Luft von einer Atmosphärenseite durch den Schalldämpfer 1 hindurch an, was durch gestrichelte Pfeile 14 veranschaulicht ist. Für diese Ansaugströmung 14 bilden der Auslass 8 eigentlich einen Einlass und der Einlass 6 eigentlich einen Auslass. In bestimmten Betriebszuständen des pneumatischen Drucksystems ist es aber erforderlich, den Druck p aus dem Aggregat 12 zumindest teilweise abzulassen, wodurch eine umgekehrte, mit voll gezeichneten Pfeilen 16 veranschaulichte Abblasströmung entsteht, die wegen einer druckbedingt relativ großen Strömungsgeschwindigkeit starke Geräusche verursacht, die durch den Schalldämpfer 1 gedämpft werden sollen. Die Abblasströmung (Pfeile 16) erfolgt somit von dem druckseitigen Einlass 6 durch den Expansionsraum 4 zum atmosphärenseitigen Auslass 8.

Wie weiterhin dargestellt ist, können der Einlass 6 und der Auslass 8 jeweils als Stutzen zum Anschluß von nicht dargestellten Rohr- oder Schlauchleitungen ausgebildet sein.

Innerhalb des Expansionsraumes 4 ist erfindungsgemäß ein aus einem porösen und dadurch durchströmbaren Material bestehendes Dämpfungselement 18 so angeordnet, dass es von der Abblasströmung 16 - natürlich auch von der umgekehrten Ansaugströmung 14 - durchströmbar ist. Dadurch hat das Dämpfungselement 18 zusätzlich auch eine Filterfunktion. Erfindungsgemäß ist das Dämpfungselement 18 unmittelbar im Anschluß an den Einlass 6 angeordnet. Dabei weist das Dämpfungselement 18 eine durchströmbare Strömungsfläche auf, die jedenfalls größer als die Innenquerschnittsfläche A₁ des Expansionsraums 4 ist. Im dargestellten Ausführungsbeispiel ist dazu das Dämpfungselement 18 als länglicher Hohlkörper mit einer porösen Körperwandung 20 ausgebildet, wobei der Hohlkörper ausgehend von dem Einlass 6 frei in den Expansionsraum 4 ragt. Auf seiner dem Einlass 6 zugekehrten Seite weist der Hohlkörper eine Einströmöffnung auf und gegenüberliegend weist er einem geschlossenen Boden auf. Die Körperwandung 20 besteht aus einem porösen, aber formstabilen Kunststoff insbesondere aus der Gruppe der Polyolefine, vorzugsweise aus einem porösen Polyethylen hoher Dichte (HDPE).

Im dargestellten Ausführungsbeispiel ist zusätzlich innerhalb eines dem Dämpfungselement 18 benachbarten Bereich des Expansionsraums 4 ein weiches, flexibles, stopffähiges Dämm-Material 22, wie Watte oder dergleichen Fasermaterial, angeordnet. Wegen der erfindungsgemäßen Anordnung des Dämpfungselementes 18 auf der an den Einlass 6 angrenzenden Seite ist das Dämm-Material 22 folglich im Bereich zwischen dem Dämpfungselement 18 und dem Auslass 8 angeordnet, kann aber auch zumindest anteilig innerhalb des Auslasses 8 angeordnet sein.

Als weitere erfindungsgemäße Maßnahme ist vorgesehen, dass das Verhältnis der Innenquerschnittsfläche A₁ des Expansionsraums 4 zur Querschnittsfläche A₂ des Auslasses 8 maximal 30 : 1 beträgt. Dieses Verhältnis sollte für eine besonders effektive Dämpfung insbesondere etwa im Bereich von 2 : 1 bis 10 : 1 liegen, insbesondere um etwa 8 : 1. Wenn es sich beispielsweise bei dem Gehäuse 2 bzw. dem Expansionsraum 4 um einen Zylinder mit kreisförmigem Innenquerschnitt handelt und der Auslass 8 ebenfalls einen kreisförmigen Innenquerschnitt aufweist, so ergibt sich ein Durchmesserverhältnis des Innendurchmessers des Expansionsraums 4 zum Innendurchmesser des Auslasses 8 zwischen 1,5 : 1 und 6 : 1, insbesondere um etwa 3 : 1.

Zweckmäßig besteht das patronenartige Gehäuse 2 aus zwei Gehäuseteilen 2a, 2b, vorzugsweise aus Kunststoff, die bevorzugt über eine Rastverbindung 24 (schnappbare, insbesondere umfänglich geschlossene Form- oder Kraftformschlußverbindung) verbunden sind. Das Dämpfungselement 18 ist vorzugsweise über einen nicht dargestellten Gewindeanschluß so mit dem einen Gehäuseteil 2a verbunden, dass die Abblasströmung 16 aus einem Einlass 6 direkt in den Hohlkörper des Dämpfungselementes 18 hinein und dann durch die Wandung 20 hindurch weiter in den Expansionraum 4 strömt. Dadurch wird genau im Bereich des ersten Querschnittssprungs eine zusätzliche, sehr effektive Schalldämpfung erreicht. Dazu trägt auch die große durchströmte Strömungsfläche des Dämpfungselements 18 bei. Das Dämpfungselement 18 kann auch einteilig mit dem Gehäuseteil 2a verbunden sein, z. B. stoffschlüssig durch 2K-Spritzen, Verkleben, Verschweißen oder dergleichen.

Die Erfindung ist nicht auf das dargestellte und beschriebene Ausführungsbeispiel beschränkt, sondem umfaßt auch alle im Sinne der Erfindung gleichwirkenden Ausführungen. So können alle einzelnen Erfindungsmerkmale alternativ oder in beliebigen Kombinationen vorgesehen sein.

## Patentansprüche

1. Schalldämpfer (1) zur Dämpfung von in pneumatischen Drucksystemen durch Druck-Abblas-Strömungen (16) von einer Druckseite zu einer Atmosphärenseite entstehenden Geräuschen, bestehend aus einem einen Expansionsraum (4) umschließenden Gehäuse (2) mit einem druckseitigen Einlass (6) für die Abblas-Strömung (16) und einem gegenüberliegenden, atmosphärenseitigen Auslass (8),
**gekennzeichnet durch** ein innerhalb des Expansionsraums (4) in der Nähe des Einlasses (6) angeordnetes, aus einem porösen, durchströmbaren Material bestehendes Dämpfungselement (18).

2. Schalldämpfer insbesondere nach Anspruch 1,
**dadurch gekennzeichnet, dass** das Dämpfungselement(18) eine für die Durchströmung wirksame Strömungsfläche aufweist, die größer als die Innenquerschnittsfläche (A₁) des Expansionsraums (4) ist.

3. Schalldämpfer nach Anspruch 2,
**dadurch gekennzeichnet, dass** das Dämpfungselement(18) als länglicher Hohlkörper mit einer einseitigen, mit dem Einlass (6) verbundenen Einströmöffnung und einer porösen Körperwandung (20) mit einem der Einströmöffnung gegenüberliegenden Boden ausgebildet ist.

4. Schalldämpfer nach Anspruch 3,
**dadurch gekennzeichnet, dass** die Körperwandung (20) aus einem porösen Kunststoff insbesondere aus der Gruppe der Polyolefine, vorzugsweise aus einem porösen Polyethylen hoher Dichte (HDPE), besteht.

5. Schalldämpfer nach einem der Ansprüche 1 bis 4 oder nach dem Oberbegriff des Anspruchs 1,
**dadurch gekennzeichnet, dass** innerhalb des Expansionsraums (4) ein Dämm-Material (22), wie Watte oder dergleichen Fasermaterial, angeordnet ist.

6. Schalldämpfer nach Anspruch 5,
**dadurch gekennzeichnet, dass** das Dämm-Material (22) im Bereich zwischen dem Dämpfungselement (18) und dem Auslass (8) und/oder zumindest anteilig innerhalb des Auslasses (8) angeordnet ist.

7. Schalldämpfer nach einem der Ansprüche 1 bis 6 oder nach dem Oberbegriff des Anspruchs 1,
**dadurch gekennzeichnet, dass** das Verhältnis des Innenquerschnitts (A₁) des Expansionsraums (4) zum Querschnitt (A₂) insbesondere des Auslasses (8) und/oder des Einlasses (6) im Bereich zwischen 2 : 1 und maximal 30 : 1, insbesondere um etwa 8 : 1, liegt.
